# EUROPEAN PATENT APPLICATION

(11) **EP 4 542 026 A1**
(43) Date of publication of application: **23.04.2025**
(21) Application number: 23205009.6
(22) Date of filing: 20.10.2023
(51) Int. Cl.: F03D 7/04, F03D 80/00

(54) **WIND TURBINE WITH A POWER BEAMING APPARATUS, CENTRAL POWER INSTALLATION FOR A WIND FARM, WIND FARM, METHOD FOR OPERATING A WIND FARM AND METHOD FOR INSTALLING A WIND TURBINE**

(71) Applicant: Siemens Gamesa Renewable Energy A/S, 7330 Brande (DK)
(72) Inventor: Eggers, Jan Rudolf, 21640 Bliedersdorf (DE)
(74) Representative: SGRE-Association

(57) **Abstract**

A wind turbine (1) with a power beaming apparatus (8), wherein
the power beaming apparatus (8) comprises at least one receiving antenna (9) for receiving electromagnetic radiation (10) and converting the received electromagnetic radiation (10) into current (11), and
the wind turbine comprises one or more electrical devices (12) electrically connected with the at least one receiving antenna (9) for supplying the current (11) from the receiving antenna (9) to the one or more electrical devices (12).

The one or more electrical devices of the wind turbine can be supplied with electrical power by power beaming even in the case that a generator of the wind turbine does not generate electrical power. In particular, neither an electrical cable connection of the wind turbine nor a large storage unit for storing electrical energy at the wind turbine are necessary.

## Description

The present invention relates to a wind turbine with a power beaming apparatus, a central power installation for a wind farm, wind farm, a method for operating a wind farm and a method for installing a wind turbine.

Wind turbines convert the wind's kinetic energy into electrical energy. Providing an infrastructure such as electrical cables for transporting the energy produced by the wind turbine from the wind harvesting site to a central station and/or an electrical grid is costly. In particular, in the case of an offshore wind farm having numerous wind turbines, electrically connecting all wind turbines to shore, is a time consuming and expensive endeavor. Recently, the concept of decentralized hydrogen production on an outside platform of an offshore wind turbine has been studied (e.g., EP 4 067 534 A1). Having a hydrogen production apparatus at the wind turbine, the generated electrical energy can be directly converted to hydrogen. Such a wind turbine may be configured to deliver hydrogen in addition to electrical energy or to deliver only hydrogen. In the latter case, an electrical cable for transporting electrical power generated by the wind turbine is not necessary.

It is one object of the present invention to provide an improved wind turbine, an improved central power installation for a wind farm, an improved wind farm, an improved method for operating a wind farm and an improved method for installing a wind turbine.

According to a first aspect, a wind turbine with a power beaming apparatus is provided. The power beaming apparatus comprises at least one receiving antenna for receiving electromagnetic radiation and converting the received electromagnetic radiation into current. Further, the wind turbine comprises one or more electrical devices electrically connected with the at least one receiving antenna for supplying the current from the receiving antenna to the one or more electrical devices.

Thus, the one or more electrical devices of the wind turbine (e.g., auxiliary devices) can be supplied with electrical power even in the case that the generator of the wind turbine does not generate electrical power. Cases in which the generator of the wind turbine does not generate electrical power include calms with not enough wind to drive the rotor of the wind turbine, defects of the wind turbine as well as deliberate switching off of the rotor because of storms or required maintenance work.

The one or more electrical devices of the wind turbine comprise, for example, one or more auxiliary devices of the wind turbine which are required to continue running even when the generator of the wind turbine does not generate electrical power. Such auxiliary devices include, for example, one or more control devices, one or more safety-related devices, one or more heating devices, one or more cooling devices, one or more pumps, and/or one or more lubrication devices.

Further, the one or more electrical devices of the wind turbine may in addition or instead comprise, for example, devices of the wind turbine which are necessary in emergency cases and/or to restart the generation of electrical power by the wind turbine. Such devices include, for example, one or more pitch drives and/or a yaw drive of the wind turbine.

A further advantage of supplying the one or more electrical devices of the wind turbine with electrical power by power beaming is that neither an electrical cable connecting the wind turbine with a remote power source nor a large storage unit for storing electrical energy at the wind turbine are necessary. In particular, there is no need for a large storage unit at the wind turbine for storing electrical energy with a sufficient capacity to supply the one or more electrical devices of the wind turbine with electrical power for the whole time period that the generator of the wind turbine does not generate electrical power.

By not requiring said electrical cable connecting the wind turbine with a remote power source and said large storage unit for storing electrical energy at the wind turbine, installation and operating of the wind turbine is simplified. This is of particular importance when installing and operating a wind farm (e.g., an offshore wind farm) with numerous individual wind turbines. Further, power beaming has tremendous benefits for offshore wind turbines installed at deep water depths, e.g., by means of floating foundations, and/or at large distances from shore.

The wind turbine is an apparatus to convert the wind's kinetic energy into electrical energy. The wind turbine comprises a rotor having a hub and one or more blades each connected to the hub. The rotor is configured to be driven by wind to rotate. The wind turbine further comprises a nacelle accommodating a generator. The generator is configured to convert the rotational energy into electrical energy. The wind turbine further comprises a tower holding, at its top end, the nacelle. The tower of the wind turbine is mechanically connected to a foundation fixed to the ground or seabed.

The wind turbine is, for example, an offshore wind turbine. Offshore includes marine environments as well as lakes and other open waters. A foundation of the offshore wind turbine includes, for example, a monopile, a tripod and/or a floating foundation.

The wind turbine may also be an onshore wind turbine. A foundation of the onshore wind turbine includes, for example, a concrete foundation.

The wind turbine is, for example, part of a wind farm comprising multiple wind turbines.

The power beaming apparatus of the wind turbine is configured for receiving power in the form of electromagnetic radiation from a power source arranged remote from the wind turbine. In particular, the at least one receiving antenna of the wind turbine is configured for receiving electromagnetic radiation from at least one transmitting antenna arranged remote from the wind turbine. Further, the at least one receiving antenna of the wind turbine is configured for receiving electromagnetic radiation carrying sufficient power for power supply of the one or more electrical devices of the wind turbine.

The at least one transmitting antenna arranged remote from the wind turbine is, for example, arranged at a distance of 500 meter or more, 1 km or more, 5 km or more and/or 10 km or more from the wind turbine.

The at least one receiving antenna is, in particular, configured for receiving electromagnetic radiation and converting it into electrical current. For example, the receiving antenna may be configured for receiving electromagnetic radiation and converting it into alternating current (AC power). Further, the at least one receiving antenna may optionally include at least one rectifier for converting the alternating current into direct current (DC power). The receiving antenna is, for example, a so-called rectenna.

The at least one receiving antenna is, for example, configured to receive electromagnetic radiation with radio frequencies. The at least one receiving antenna is, for example, configured to receive electromagnetic radiation in a frequency range of 500 MHz or larger, 1 GHz or larger, 3 GHz or larger, 5 GHz or larger, 7 GHz or larger, 10 GHz or larger and/or 20 GHz or larger.

A rated reception power of the at least one receiving antenna has, for example, a value sufficiently large (minimum value) for supplying the one or more electrical devices of the wind turbine with electrical power. The rated reception power of the at least one receiving antenna is, for example, 50 kW or larger, 100 kW or larger and/or 500 kW or larger (minimum rated reception power).

In addition or instead of said minimum rated reception power, the rated reception power of the at least one receiving antenna has, for example, a maximum value suitable to configure the at least one receiving antenna with a moderate size. The rated reception power of the at least one receiving antenna is, for example, 2 MW or smaller, 1 MW or smaller, 500 kW or smaller, 100 kW or smaller, 50 kW or smaller and/or 10 kW or smaller.

In case that the power beaming apparatus of the wind turbine comprises multiple receiving antennas, said rated minimum reception power and said rated maximum reception power is, for example, the reception power of each of the multiple receiving antennas or of the combined multiple receiving antennas.

The one or more electrical devices are, for example, electrically connected with the at least one receiving antenna by means of one or more electrical cables.

Optionally, the one or more electrical devices are, for example, electrically connected with the at least one receiving antenna via one or more DC/AC transformers to convert DC current supplied by the at least one receiving antenna (e.g., rectenna) into AC current for supplying the one or more electrical devices with AC current.

The at least one receiving antenna is, for example, arranged (e.g., attached) at a structure of the wind turbine. One, more or all of the at least one receiving antenna is/are, for example, arranged (e.g., attached) at a tower of the wind turbine, a nacelle of the wind turbine and/or at one or more outside platforms of the wind turbine.

The wind turbine may further comprise, for example, a data transfer unit for wireless data transfer with a remote installation (e.g., a central power installation of a wind farm).

The data transfer unit includes, for example, a transmitting and receiving unit for transmitting and receiving radio frequency signals.

Having the data transfer unit, the wind turbine can, for example, send a signal to a central control unit of the wind farm in case that the wind turbine is idle. The signal sent to the central control unit is, for example, a request-for-power signal. The wind turbine "being idle" may include a condition of no energy production by the wind turbine. "Being idle" may include, in addition, a state-of-charge of a storage unit for storing electrical energy of the wind turbine and/or an estimated time duration of not enough wind for production of electrical energy being larger than a predetermined time duration threshold (e.g., based on a weather forecast).

In embodiments of all aspects described herein, also a "request-to-stop" signal may, for example, be transmitted from the wind turbine (e.g., each wind turbine of the wind farm) to the central control unit of the wind farm. The "request-to-stop" signal is, for example, a signal requesting a stop of electrical energy transmitted to the wind turbine by power beaming. The request-for-stop signal may, for example, be sent in emergency cases, in cases when a battery of the wind turbine is fully charged and/or the wind turbine is operating again and/or in cases in which wind conditions are sufficient again for electrical energy production by the wind turbine.

According to an embodiment of the first aspect, the wind turbine comprises a generator for generating electrical power and a hydrogen production apparatus for converting the generated electrical power into hydrogen.

By having the hydrogen production apparatus at the wind turbine, the electrical energy generated by the wind turbine can be directly and fully transformed into green hydrogen. Hence, an electrical cable connection for transporting the generated electrical energy from the wind turbine to a grid is not necessary ("island mode").

The proposed power beaming apparatus is of particular advantage for such a wind turbine with hydrogen production apparatus but without electrical cable connection to other installations (island mode). In particular, power beaming can provide the necessary electrical power for the one or more electrical devices of the wind turbine in case that the wind turbine is not producing electrical energy (idle mode).

The hydrogen production apparatus is, for example, configured for producing hydrogen gas by converting water into hydrogen by means of electrical power generated by the generator of the wind turbine. Thereby, water is separated into hydrogen and oxygen by an electrolysis process.

The hydrogen production apparatus comprises, for example, one or more electrolysis units for producing hydrogen gas, one or more compressor units for compressing the produced hydrogen gas, one or more cooling units for cooling components of the hydrogen production apparatus, a water-supply apparatus for supplying water to the hydrogen production apparatus, a water-intake apparatus for taking in water from the sea and/or an open water reservoir and supplying the water to the hydrogen production apparatus, and/or one or more desalination units for desalinating sea water.

The wind turbine comprises, for example one or more outside platforms, wherein the hydrogen production apparatus is arranged on the one or more outside platforms. Further, the one or more outside platforms are, for example, arranged at the outside of the tower or at the outside of the nacelle of the wind turbine.

The wind turbine is, for example, connected by means of a hydrogen tube with another installation for transporting the produced hydrogen to the other installations.

According to a further embodiment of the first aspect, the one or more electrical devices include one or more electrical loads and/or one or more electrical storage units.

In case that the one or more electrical devices include the one or more electrical loads, the at least one receiving antenna is, for example, directly electrically connected to the one or more electrical loads.

The one or more electrical loads comprise, for example, one or more of said auxiliary devices of the wind turbine which are required to continue running even when the generator of the wind turbine does not generate electrical power. Further, the one or more electrical loads may in addition or instead comprise, for example, said devices of the wind turbine which are necessary in emergency cases and/or to restart the generation of electrical power by the wind turbine.

In case that the one or more electrical devices include the one or more electrical storage units, the at least one receiving antenna is, for example, directly electrically connected to the one or more electrical storage units.

Further, the one or more electrical storage units are, for example, electrically connected to said one or more loads.

Having the electrical connection of the at least one receiving antenna with the one or more electrical storage units allows to collect and store the electrical energy transmitted by power beaming from remote to the wind turbine. Then, the stored electrical energy can be supplied to said one or more loads.

The one or more electrical storage units have, in particular, a small storing capacity of, for example, 3000 kWh or smaller, 1000 kWh or smaller, 500 kWh or smaller and/or 200 kWh or smaller.

According to a further embodiment of the first aspect, the power beaming apparatus comprises one or more actuators for directing the at least one receiving antenna towards a transmitting antenna arranged remote from the wind turbine.

Thus, the at least one receiving antenna can be pointed towards the transmitting antenna arranged remote from the wind turbine. Further, the at least one receiving antenna can be selectively pointed towards one specific of several transmitting antennas arranged remote from the wind turbine.

The one or more actuators are, for example, configured for changing an azimuth angle of the at least one receiving antenna. The one or more actuators may, for example, in addition also be configured for changing an elevation of the at least one receiving antenna.

According to a further embodiment of the first aspect, the power beaming apparatus comprises at least one transmitting antenna for transmitting electromagnetic radiation to a receiving antenna arranged remote from the wind turbine.

With the at least one transmitting antenna, the wind turbine is capable to transmit power (generated by the wind turbine and/or received by means of its receiving antenna) to another installation arranged remote from the wind turbine.

For example, the wind turbine may be part of a wind farm (e.g., an offshore wind farm). In this case, the at least one transmitting antenna can be used to transmit power to another wind turbine of the wind farm. The other wind turbine of the wind farm may, for example, be currently not generating electrical power (idle wind turbine). Further, the power transmitted by the wind turbine to the other idle wind turbine may be used to supply one or more electrical devices of the other wind turbine with electrical power.

In this example, the wind turbine may function as a power source and transmit power generated by the wind turbine to the other idle wind turbine. Alternatively, the wind turbine may function as a relay station and relay power received through its receiving antenna to the other idle wind turbine.

In embodiments of the first aspect, the power beaming apparatus comprises one or more further actuators for directing the at least one transmitting antenna towards the receiving antenna arranged remote from the wind turbine.

Thus, the at least one transmitting antenna can be pointed towards the receiving antenna arranged remote from the wind turbine. Further, the at least one transmitting antenna can be selectively pointed towards one specific of several available receiving antennas arranged remote from the wind turbine.

The one or more further actuators are, for example, configured for changing an azimuth angle of the at least one transmitting antenna. The one or more further actuators may, for example, in addition also be configured for changing an elevation of the at least one transmitting antenna.

According to a further embodiment of the first aspect, a rated transmission power of the at least one transmitting antenna is 2 MW or smaller, 1 MW or smaller, 500 kW or smaller 100 kW or smaller, 50 kW or smaller and/or 10 kW or smaller.

The at least one transmitting antenna having said rated transmission power can be used for supplying power to another idle wind turbine such that important electrical devices of the other idle wind turbine can continue running. The wind turbine can function in this embodiment either as a power source or as a relay station.

The "rated transmission power" and/or the "rated reception power" of a transmitting antenna and/or a receiving antenna, respectively, as used herein means, for example, the total electromagnetic energy flow received and/or transmitted, respectively, via the described antenna.

According to a further embodiment of the first aspect, a rated transmission power of the at least one transmitting antenna is 3 MW or larger, 5 MW or larger, 10 MW or larger, 15 MW or larger and/or 20 MW or larger.

The at least one transmitting antenna having said rated transmission power can be used for transporting the electrical energy generated by the generator of the wind turbine to another (onshore or offshore) installation and/or to the grid.

According to a second aspect, a central power installation for a wind farm is provided. The central power installation comprises:
a central power source for providing electrical power, and
a central power beaming apparatus including at least one transmitting antenna for generating electromagnetic radiation from the provided electrical power and transmitting the electromagnetic radiation to a receiving antenna of a wind turbine of the wind farm.

With the central power installation having the central power beaming apparatus, a wind turbine of the wind farm can be supplied with electrical power by power beaming from the central power installation. Hence, an electrical cable connecting the wind turbine with the central power source is not necessary. Further, a large storage unit for storing electrical energy at the wind turbine is also not required.

The wind farm is, for example, an offshore wind farm. However, the wind farm may, for example, also be an onshore wind farm.

The central power installation may, for example, be an offshore installation. Said offshore installation may include an offshore sub-station with one or more platforms. Said offshore installation may further include a foundation such as a monopile or the like driven into the seabed or a floating foundation anchored to the seabed. Alternatively, the central power installation may, for example, also be an onshore installation.

The central power installation including its at least one transmitting antenna is, for example, configured for transmitting electromagnetic radiation to the receiving antennas of multiple wind turbines of the wind farm.

The central power source is, for example, electrically connected to an onshore installation and/or a grid (e.g., a national grid) by means of one or more electrical cables.

The central power source includes, for example, a grid connection to a large (e.g., national) power grid and/or a large storage unit for storing electrical energy.

The large storage unit of the central power source of the central power installation has, for example, a storage capacity for storing electrical energy of 400 kWh or more, 1 MWh or more, 10 MWh or more and/or 50 MWh or more such that a wind turbine of the wind farm can be supplied with electrical power by power beaming from the central power installation.

In cases in which electrical power generated by the wind turbine is transmitted by power beaming to the central power installation, the storage capacity of the large storage unit of the central power source has, for example, a value of 10 MWh or more, 20 MWh or more, 50 MWh or more, 100 MWh or more and/or 300 MWh or more.

According to an embodiment of the second aspect, the central power installation comprises a central control unit configured for determining a power supply scheme for supplying power by power beaming to an idle wind turbine of the wind farm, wherein the power supply scheme includes instructions for transmitting electromagnetic radiation from the at least one transmitting antenna of the central power installation and/or from at least one transmitting antenna of another wind turbine of the wind farm functioning as power source directly or via one or more further wind turbines of the wind farm functioning as relay stations to the idle wind turbine.

By determining the power supply scheme, an idle wind turbine of the wind farm can be supplied with electrical power in an efficient way.

The idle wind turbine of the wind farm is, in particular, a wind turbine of the wind farm which is currently not generating electrical power.

The central power beaming apparatus comprises, for example, one or more actuators for directing the at least one transmitting antenna towards the receiving antenna of the wind turbine of the wind farm. The one or more further actuators are, for example, configured for changing an azimuth angle of the at least one transmitting antenna. The one or more further actuators may, for example, in addition be configured for changing an elevation of the at least one transmitting antenna.

According to a further embodiment of the second aspect, the central power installation comprises at least one receiving antenna with a reception power of 3 MW or larger, 5 MW or larger, 10 MW or larger, 15 MW or larger and/or 20 MW or larger for receiving power from a power beaming apparatus of a wind turbine of the wind farm.

Thus, the central power installation can be used for transporting the electrical energy generated by a remote wind turbine by power beaming to the central power installation.

According to a third aspect, a wind farm is provided. The wind farm comprises multiple of the above-described wind turbine, and/or one or more of the above-described central power installation.

Thus, power beaming for supplying idle wind turbines of the wind farm with electrical power and/or for transporting energy generated by the wind turbines of the wind farm to the central power installation can be applied for a large wind farm comprising numerous individual wind turbines and one or more central power installations.

According to a fourth aspect, a method for operating a wind farm is provided. The wind farm comprises multiple of the above-described wind turbine and one or more of the above-described central power installation. Furthermore, the method comprises the steps:
receiving, by a central control unit of the central power installation, a data signal indicating that a wind turbine of the wind farm is idle,
determining, by the central control unit, a power supply scheme for supplying power to the idle wind turbine by power beaming, and
transmitting electromagnetic radiation from the at least one transmitting antenna of the central power installation and/or from at least one transmitting antenna of another wind turbine of the wind farm functioning as power source directly or via one or more further wind turbines of the wind farm functioning as relay stations to the idle wind turbine.

Thus, an idle wind turbine of the wind farm can be supplied with electrical power. Hence, it can be ensured that important electrical devices (e.g., auxiliary devices and/or devices required for a restart of the wind turbine) of the idle wind continue running.

Further, by determining a power supply scheme for supplying power to the idle wind turbine by power beaming, the electrical power available in the wind farm can be efficiently distributed to idle wind turbines of the wind farm.

According to an embodiment of the fourth aspect, determining the power supply scheme includes:
determining a first line-of-sight between the at least one transmitting antenna of the central power installation and the at least one receiving antenna of the idle wind turbine,
determining a second line-of-sight between the at least one transmitting antenna of the other wind turbine functioning as power source and the at least one receiving antenna of the idle wind turbine, and/or
determining one or more third lines-of-sight between the respective receiving antennas and transmitting antennas of each member of a supply chain, the members of the supply chain including the central power installation or the other wind turbine functioning as power source, one or more further wind turbines of the wind farm functioning as relay stations, and the idle wind turbine.

By determining the first, second and/or third lines-of-sight, a possible and/or efficient power beaming path, including potentially one or more relay stations, can be determined.

The method includes, for example, determining if one or more obstacles are present along the first, second and/or third lines-of-sight. Moreover, the method includes, for example, selecting one, more or all of the members of the supply chain based on the lines-of-sight for which it was determined that no obstacles are present.

According to a further embodiment of the fourth aspect, the method comprises:
directing the at least one transmitting antenna of the central power installation and the at least one receiving antenna of the idle wind turbine according to the determined first line-of-sight,
directing the at least one transmitting antenna of the other wind turbine functioning as power source and the at least one receiving antenna of the idle wind turbine according to the determined second line-of-sight, and/or
directing the at least one transmitting antenna of the central power installation or the at least one transmitting antenna of the other wind turbine functioning as power source, the at least one receiving antenna and the at least one transmitting antenna of each of the one or more further wind turbines of the wind farm functioning as relay stations, and/or the at least one receiving antenna of the idle wind turbine according to the determined multiple third lines-of-sight.

According to a fifth aspect, a method for installing a wind turbine is provided. The method comprises the steps:
erecting a wind turbine at a wind harvesting site,
arranging at least one receiving antenna for power beaming at a structure of the wind turbine,
transmitting power by power beaming to the wind turbine, wherein electromagnetic radiation is transmitted from at least one transmitting antenna arranged remote from the wind turbine to at least one receiving antenna of the wind turbine and converted to current,
supplying the current from the receiving antenna to one or more electrical devices of the wind turbine,
providing an electrical cable connection from a remote location to the wind turbine, and
removing the at least one receiving antenna from the structure of the wind turbine.

By the method for installing a wind turbine according to the fifth aspect, the at least one receiving antenna for power beaming can be arranged temporarily at a structure of the wind turbine. Hence, the at least one receiving antenna for power beaming can be used temporarily for supplying the one or more electrical devices of the wind turbine with electrical power during installation of the wind turbine. As soon as the electrical cable is provided for connecting the wind turbine with a remote location (e.g., a central installation of a wind farm and/or of a grid), the one or more electrical devices of the wind turbine can - if necessary (e.g., when the wind turbine is idle) - be supplied with power by use of this electrical cable. Then, the temporarily arranged at least one receiving antenna can be removed again from the structure of the wind turbine.

The respective entity, e.g., the central control unit and the wind turbine control unit, may be implemented in hardware and/or in software. If said entity is implemented in hardware, it may be embodied as a device such as a computer or as a processor or as a part of a system, e.g., a computer system. If said entity is implemented in software it may be embodied as a computer program product, as a function, as a routine, as a program code or as an executable object.

The at least one transmitting antenna arranged remote from the wind turbine according to the fifth aspect is, for example arranged at the above-described central power installation. In the case of the fifth aspect, the central power installation may, for example, be an onshore or offshore installation including a ship.

According to a further aspect, the invention relates to a computer program product comprising a program code for executing the above-described method step of determining a power supply scheme, when run on at least one computer.

A computer program product, such as a computer program means, may be embodied as a memory card, USB stick, CD-ROM, DVD or as a file which may be downloaded from a server in a network. For example, such a file may be provided by transferring the file comprising the computer program product from a wireless communication network.

The embodiments and features described with reference to the first aspect of the present invention apply, mutatis mutandis, to the other aspects of the present invention and vice versa.

Further possible implementations or alternative solutions of the invention also encompass combinations - that are not explicitly mentioned herein - of features described above or below with regard to the embodiments. The person skilled in the art may also add individual or isolated aspects and features to the most basic form of the invention.

Further embodiments, features and advantages of the present invention will become apparent from the subsequent description and dependent claims, taken in conjunction with the accompanying drawings, in which:
Fig. 1 shows a perspective view of a wind turbine and a remote central power apparatus according to an embodiment;
Fig. 2 shows a further embodiment of the wind turbine of Fig. 1;
Fig. 3 shows a further embodiment of the central power apparatus of Fig. 1;
Fig. 4 illustrates different options for arranging a rectenna and a transmitting antenna at structural components of the wind turbine of Fig. 1;
Fig. 5 shows a wind farm with multiple wind turbines and a central power apparatus according to an embodiment;
Fig. 6 shows a flowchart illustrating a method for operating a wind farm according to an embodiment;
Fig. 7 shows a flowchart illustrating a method for installing a wind turbine according to an embodiment; and
Fig. 8 shows two different installation states of the method of Fig. 7.

In the Figures, like reference numerals designate like or functionally equivalent elements, unless otherwise indicated.

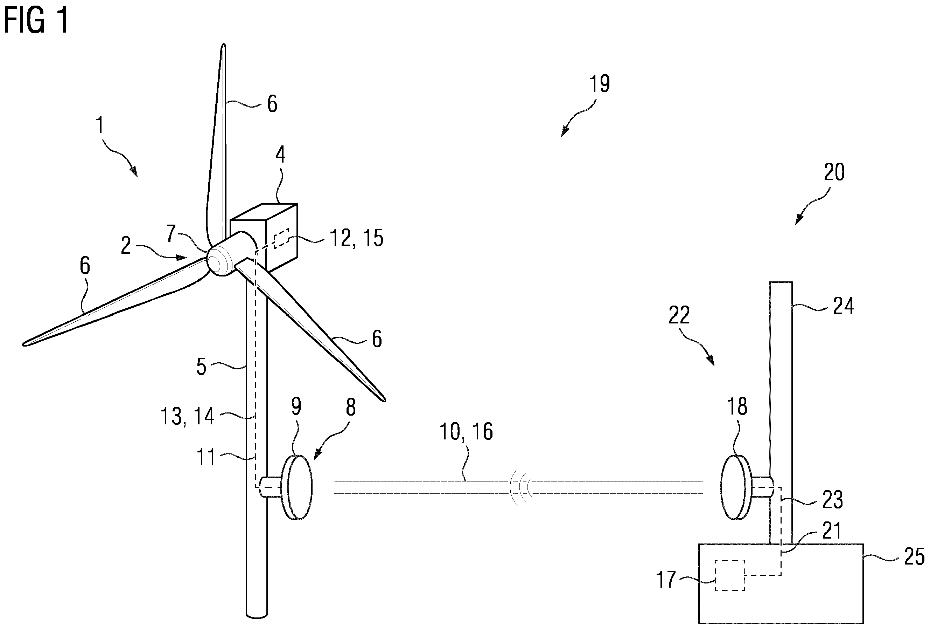

Fig. 1 shows a wind turbine 1 according to an embodiment.

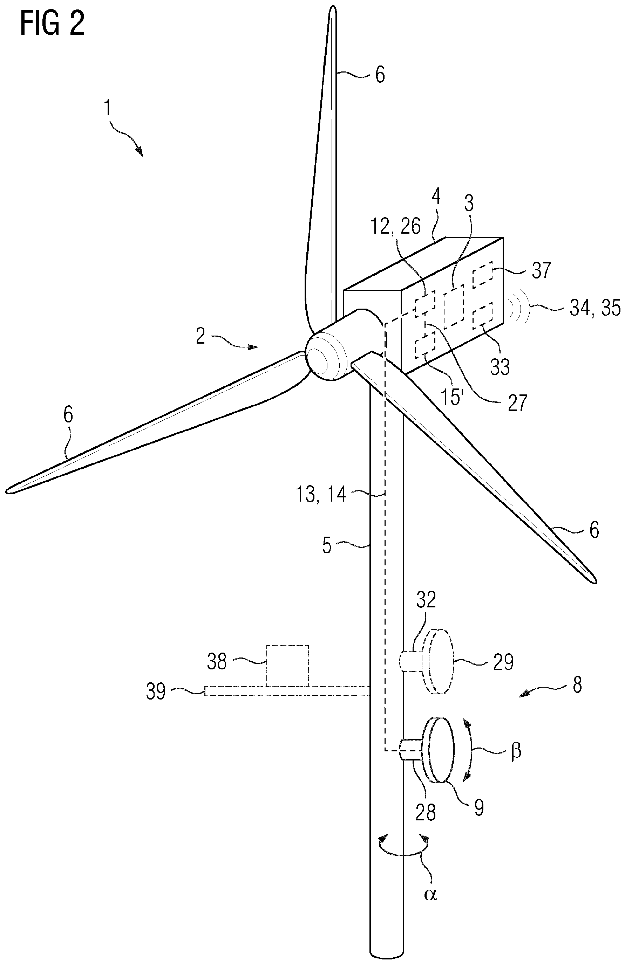

The wind turbine 1 comprises a rotor 2 connected to a generator 3 (Fig. 2) arranged inside a nacelle 4. The nacelle 4 is arranged at the upper end of a tower 5 of the wind turbine 1. The rotor 2 comprises, for example, three rotor blades 6. The rotor blades 6 are each connected to a hub 7 of the rotor 2.

The wind turbine 1 further comprises a power beaming apparatus 8. The power beaming apparatus 8 includes at least one receiving antenna 9 for receiving electromagnetic radiation 10 and converting the received electromagnetic radiation 10 into electrical current 11. The receiving antenna 9 converts the received electromagnetic radiation 10, for example, into alternating current AC. The receiving antenna 9 includes, for example, one or more rectifiers configured for converting the alternating current AC into direct current 11. In this case, the receiving antenna 9 may also be called a "rectenna". In the following, the receiving antenna 9 (and other receiving antennas) is described as a rectenna 9 without being limiting.

The wind turbine 1 comprises one or more electrical devices 12 electrically connected with the at least one rectenna 9. The electrical connection 13 of the one or more electrical devices 12 and the at least one rectenna 9 is, for example, established by means of one or more electrical cables 14. Hence, the one or more electrical devices 12 can be supplied with direct current 11 from the rectenna 9. In particular, the one or more electrical devices 12 of the wind turbine 1 can be supplied with electrical power 11 even in the case that the generator 3 of the wind turbine 1 does not generate electrical power (idle wind turbine, e.g., when not enough wind is blowing).

The one or more electrical devices 12 include, for example, one or more loads 15 such as one or more auxiliary devices of the wind turbine 1 (e.g., control devices, cooling devices etc.) which are required to continue running even when the generator 3 of the wind turbine 1 does not generate electrical power. Further, the one or more loads 15 may in addition or instead comprise devices which are necessary in emergency cases and/or to restart the generation of electrical power by the wind turbine (e.g., a pitch drive, a yaw drive).

The power beaming apparatus 8 of the wind turbine 1 is configured for receiving power 16 in the form of electromagnetic radiation 10 from a power source 17 arranged remote from the wind turbine 1. In particular, the at least one rectenna 9 of the wind turbine 1 is configured for receiving electromagnetic radiation 10 from at least one transmitting antenna 18 arranged remote from the wind turbine 1. Further, the at least one rectenna 9 of the wind turbine 1 is configured for receiving electromagnetic radiation 10 carrying a sufficient amount of power 16 for power supply of the one or more electrical devices 12 of the wind turbine 1.

The wind turbine 1 shown in Fig. 1 is, as an example, part of a wind farm 19 (e.g., an offshore wind farm).

In Fig. 1, a central power installation 20 of the wind farm 19 is illustrated. The central power installation 20 comprises the central power source 17 for providing electrical power 21. The central power source 17 may include one or more power storage units and/or a grid connection. Moreover, the central power installation 20 comprises a central power beaming apparatus 22 including the at least one transmitting antenna 18. The at least one transmitting antenna 18 is, electrically connected (e.g., with an electrical cable 23) with the central power source 17.

The at least one transmitting antenna 18 is, in particular, configured for generating electromagnetic radiation 10 from the provided electrical power 21. The at least one transmitting antenna 18 is further configured for transmitting the generated electromagnetic radiation 10 to the rectenna 9 of a wind turbine of the wind farm 19 (e.g., the wind turbine 1 shown in Fig. 1).

The central power installation 20 of the wind farm 19 includes, for example, one or more structural elements 24 and/or housings 25. The at least one transmitting antenna 18 and/or other components (e.g., other antennas) of the central power beaming apparatus 22 may be attached at the one or more structural elements 24 and/or housings 25 of the central power installation 20. Further, the central power source 17 (e.g., one or more storage units of the central power source 17 and/or a grid connection of the central power source 17) and/or other equipment of the central power installation 20 may be accommodated in the one or more housings 25 of the central power installation 20.

In case of an offshore wind farm 19, the central power installation 20 may be located offshore or onshore.

Fig. 2 shows several optional elements of the wind turbine 1 of Fig. 1.

For example, the one or more electrical devices 12 of the wind turbine 1 (which are supplied with power by means of power beaming via the rectenna 9) may include - instead of one or more electrical loads 15 - one or more electrical storage units 26. Further, the at least one rectenna 9 is electrically connected 13, 14 with the one or more electrical storage units 26. The wind turbine 1 further comprises the one or more loads 15' (e.g., auxiliary devices) electrically connected (reference sign 27) to the one or more electrical storage units 26.

By having the one or more low-capacity electrical storage units 26, the electrical energy 16 (Fig. 1) transmitted by power beaming and received by the at least one rectenna 9 can be collected and temporarily stored at the wind turbine 1. Then, the stored electrical energy can be supplied to said one or more loads 15.

As shown in Fig. 2, the power beaming apparatus 8 may optionally comprise one or more actuators 28 for directing the at least one rectenna 9 towards a remotely arranged transmitting antenna 18 (Fig. 1). The one or more actuators 28 are, in particular, configured for changing an azimuth angle α of the at least one rectenna 9. The one or more actuators 28 may in addition also be configured for changing an elevation β (elevation angle β) of the at least one rectenna 9.

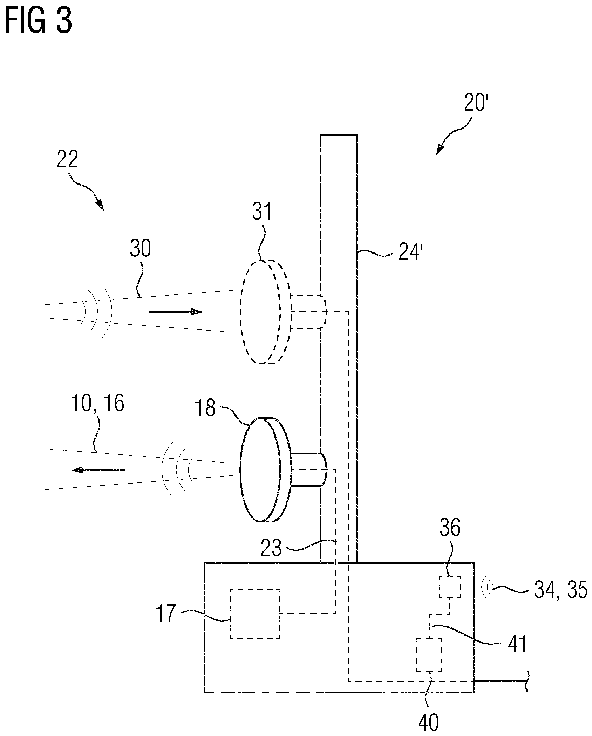

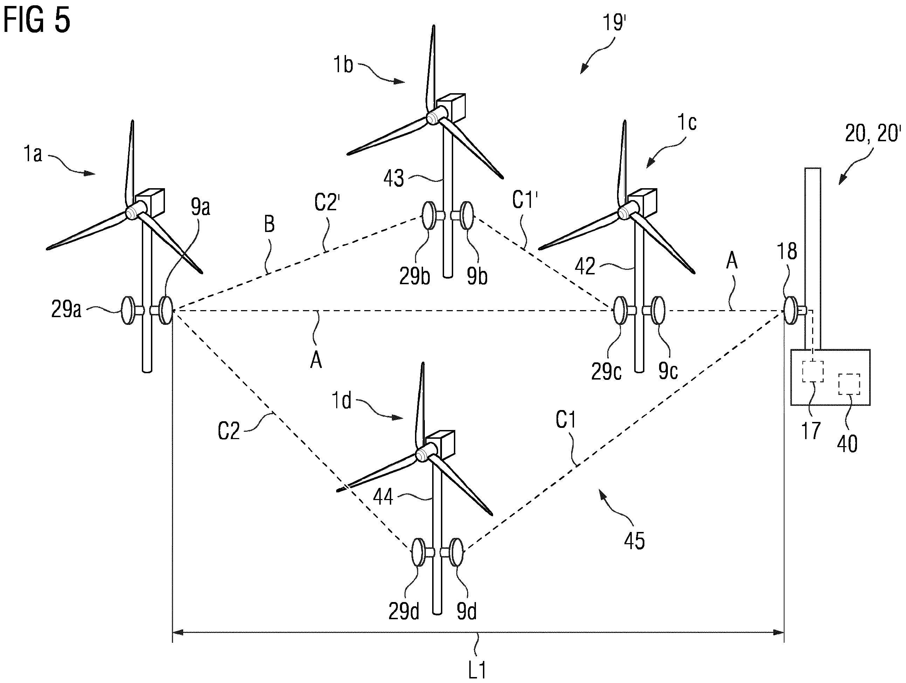

The wind turbine 1, i.e., its power beaming apparatus 8, may optionally comprise at least one transmitting antenna 29 (Fig. 2) for transmitting electromagnetic radiation 30 to a rectenna 31 arranged remote from the wind turbine 1 (Fig. 3). The at least one transmitting antenna 29 of the wind turbine 1 is, for example, used for transmitting electromagnetic radiation 30 to a rectenna 31 of the central power installation 20' (Fig. 3) or to a rectenna 9a of another wind turbine 1a of the wind farm 19' (Fig. 5).

In a first variant, the at least one transmitting antenna 29 of the wind turbine 1 (Fig. 2) is, for example, used for supplying power to another idle wind turbine 1a of the wind farm 19' such that important electrical devices (similar as the devices 12 in Fig. 1) of the other idle wind turbine 1a can continue running. The wind turbine 1 functions in this first variant as a power source (see reference sign 43 in Fig. 5) or as a relay station (see reference sign 44 in Fig. 5). A rated transmission power of the at least one transmitting antenna 29 is in the first variant, for example, 2 MW or smaller, 1 MW or smaller, 500 kW or smaller, 100 kW or smaller 50 kW or smaller and/or 10 kW or smaller.

In a second variant, the at least one transmitting antenna 29 of the wind turbine 1 (Fig. 2) is, for example, used for transporting the electrical energy generated by the generator 3 of the wind turbine 1 to another (onshore or offshore) installation 20' and/or to a grid (e.g., a national electrical grid). The rated transmission power of the at least one transmitting antenna 29 is in the second variant, for example, 3 MW or larger, 5 MW or larger, 10 MW or larger, 15 MW or larger and/or 20 MW or smaller.

The at least one transmitting antenna 29 of the wind turbine 1 (Fig. 2) may comprise - similar as the at least one rectenna 9 - one or more actuators 32 for directing the at least one transmitting antenna 29 towards a remotely arranged rectenna 31, 9a (Figs. 3, 5) by changing an azimuth angle α and/or an elevation β of the at least one transmitting antenna 29.

The wind turbine 1 may optionally further comprise a data transfer unit 33 (Fig. 2) for wireless data transfer 34 with a remote installation (e.g., the central power installation 20, 20'). By means of the data transfer unit 33 a signal 35 can be sent for example to a data transfer unit 36 of the central power installation 20' (Fig. 3). For example, in case that the wind turbine 1 is idle, a signal 35 including a request for power can be sent to the central power installation 20'.

The wind turbine 1 further includes, for example, a control unit 37 (Fig. 2) for determining an idle status based on data received from one or more components of the wind turbine 1 (e.g., the generator 3). The control unit 37 may be further configured for generating the request-for-power signal 35.

As show in Fig. 2, the wind turbine 1 may optionally comprise a hydrogen production apparatus 38 for producing hydrogen by means of electrical power generated by the generator 3. The hydrogen production apparatus 38 may be arranged at an outside platform 39 of the tower 5 of the wind turbine 1 or may be arranged at another structural component of the wind turbine 1.

By having the hydrogen production apparatus 38 at the wind turbine 1, the electrical energy generated by the generator 3 can be directly and fully transformed into green hydrogen. Hence, an electrical cable connection for transporting the electrical energy generated by the generated 3 of the wind turbine 1 to another installation or to a grid can be completely omitted ("island mode"). In case that such a wind turbine 1 with hydrogen production apparatus 38 is temporarily not producing electrical energy (idle mode, e.g., due to low winds), the power beaming apparatus 8 is of particular advantage. The reason is that the necessary electrical power for the one or more electrical devices 12 of the wind turbine 1 can be provided by power beaming during the idle status of the wind turbine 1.

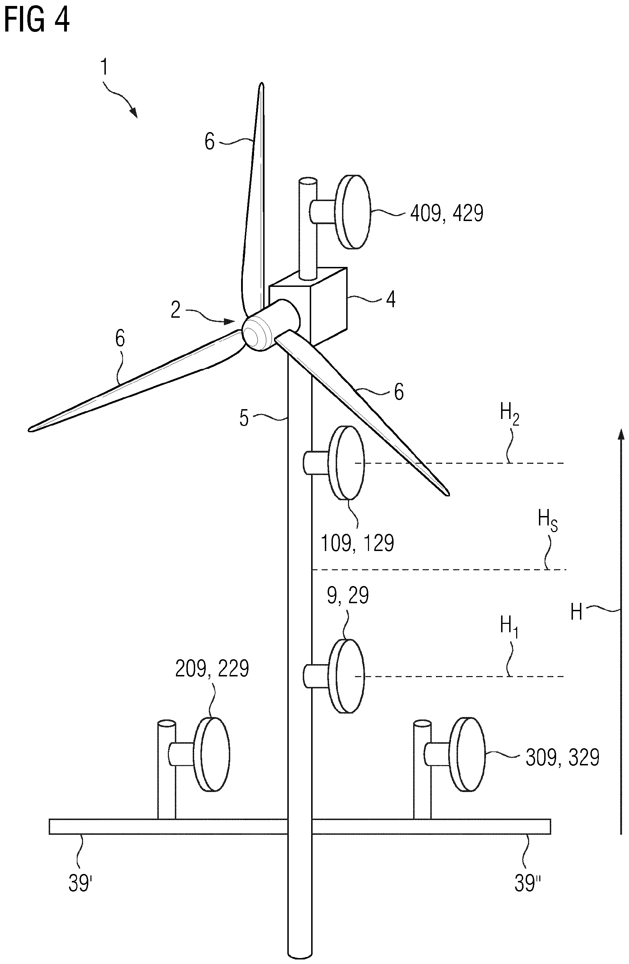

Fig. 4 illustrates different options for arranging the at least one rectenna 9 and/or the at least one transmitting antenna 29 (Fig. 2) at structural components of the wind turbine 1. For example, one, more or all of the at least one rectenna 9, 109 and the at least one transmitting antenna 29, 129 may be arranged (e.g., attached) at the tower 5 of the wind turbine 1. Further, one, more or all of the at least one rectenna 9 and the at least one transmitting antenna 29 may be arranged at the tower 5 at a first height H₁ which is smaller than a shadowing height H_{S} of the wind turbine 1. The shadowing height H_{S} is a height to which the rotor blades 6 extend during rotation. Further, one, more or all of the at least one rectenna 109 and the at least one transmitting antenna 129 may, for example, be arranged at the tower 5 at a height H₂ which is larger than the shadowing height H_{S}. In this case, power beaming using the at least one rectenna 109 may be performed with the nacelle 4 and the rotor 2 rotated by means of a yaw bearing (not shown) of the wind turbine 1 to a position in which they do not interfere with a line-of-sight (e.g., line-of-sight A in Fig. 5) to the at least one transmitting antenna 18. The shadowing height H_{S}, the first height H₁, and the second height H₂ are each a height with respect to a height direction H of the erected wind turbine 1.

Moreover, as shown in Fig. 4, one, more or all of the at least one rectenna 209, 309 and the at least one transmitting antenna 229, 329 may, for example, be arranged at an outside platform 39', 39" of the tower 5. The platform 39', 39" is, for example, a platform 39 on which the hydrogen production apparatus 38 is arranged (Fig. 2) or another platform of the wind turbine 1.

Furthermore, as shown in Fig. 4, one, more or all of the at least one rectenna 409 and the at least one transmitting antenna 429 may, for example, be arranged at the nacelle 4 (e.g., on top of a nacelle housing).

Fig. 3 shows an embodiment of the central power installation 20'. The central power installation 20' comprises the central power beaming apparatus 22 with the at least one transmitting antenna 18 and optionally the at least one rectenna 31.

The central power installation 20' may further comprise a central control unit 40. The central control unit 40 is, for example, connected wireless or wired 41 with the data transfer unit 36. The central control unit 40 is, for example, configured for receiving the data 34 including the signal 35 (Fig. 2) from the wind turbine 1, the signal 35 indicating that the wind turbine 1 is idle. The signal 35 may include a request-for-power signal.

The central control unit 40 is, for example, configured for determining a power supply scheme for supplying power 16 (Fig. 1) by power beaming to the idle wind turbine 1 of the wind farm 19.

The power supply scheme includes, for example, instructions for transmitting electromagnetic radiation 10 from the at least one transmitting antenna 18 of the central power installation 20, 20' directly or indirectly (i.e., indirectly via one or more further wind turbines 1d of the wind farm 19, 19' functioning as relay stations 44, Fig. 5) to the idle wind turbine 1.

Alternatively, another wind turbine 1b (Fig. 5) of the wind farm 19' may function as power source 43. In this case, the power supply scheme includes, for example, instructions for transmitting electromagnetic radiation 10 from the at least one transmitting antenna 29b of the other wind turbine 1b of the wind farm 19' functioning as power source 43 directly or indirectly (i.e., via relay stations, see above) to the idle wind turbine 1.

In case that the wind turbine 1 comprises the at least one transmitting antenna 29 (Fig. 2) and the central power installation 20' comprises the at least one rectenna 31, the electrical power generated by the generator 3 of the wind turbine 1 can be transported from the wind turbine 1 to the central power installation 20' by means of power beaming. In this case a transmission power of the at least one transmitting antenna 29 of the wind turbine 1 and a reception power of the at least one rectenna 31 of the central power installation 20' is, for example, 3 MW or larger, 5 MW or larger, 10 MW or larger, 15 MW or larger and/or 20 MW or larger.

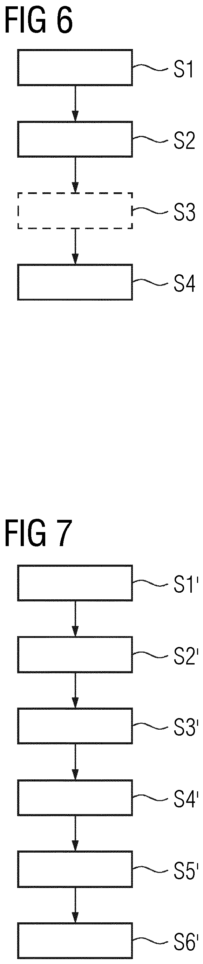

In the following, a method for operating a wind farm 19, 19' is described with respect to Fig. 6.

The wind farm 19, 19' (Figs. 1, 5) comprises multiple wind turbines 1a, 1b, 1c, 1d each having one, more or all of the features described above for the wind turbine 1 shown in Figs. 1, 2, 4. The wind farm 19, 19' further comprises one or more central power installations 20, 20' each having one, more or all of the features described above for the central power installation 20, 20' shown in Figs. 1 and 3.

In a first step S1 of the method, the central control unit 40 (Fig. 3) of the central power installation 20, 20' receives a data signal 35 indicating that a wind turbine 1a (Fig. 5) of the wind farm 19, 19' is idle.

In a second step S2 of the method, the central control unit 40 (Fig. 3) of the central power installation 20, 20' determines a power supply scheme for supplying power 16 (Fig. 1) to the idle wind turbine 1a (Fig. 5) by power beaming.

For example, in step S2 a first line-of-sight A between the at least one transmitting antenna 18 of the central power installation 20, 20' and the at least one rectenna 9a of the idle wind turbine 1a is determined.

The central control unit 40 may further determine if an obstacle 42 is present along the first line-of-sight A. For example, the wind turbine 1c in Fig. 5 may be an obstacle along the first line-of-sight A. In addition or alternatively, the central control unit 40 may determine if a length L1 of the first line-of-sight A is smaller than or equal to a predetermined threshold length for power beaming by the at least one transmitting antenna 18.

If the central control unit 40 determines that an obstacle 42 is present along the first line-of-sight A and/or that the length L1 of the first line-of-sight A is larger than the predetermined threshold length, another wind turbine 1b of the wind farm 19, 19' may be used as power source 43 and/or one or more other wind turbines 1d may be used as relay stations 44.

For example, in step S2, a second line-of-sight B between the at least one transmitting antenna 29b of the other wind turbine 1b functioning as power source 43 and the at least one rectenna 9a of the idle wind turbine 1a is determined.

In addition or alternatively, one or more third lines-of-sight C1, C2 (or C1', C2') between the respective rectennas 9d, 9a and transmitting antennas 18, 29d, 29a of each member of a supply chain 45 is determined. The supply chain 45 may include the central power installation 20, 20' or another wind turbine 1b, 1c functioning as power source 43, one or more further wind turbines 1b, 1d of the wind farm 19, 19' functioning as relay stations 44, and the idle wind turbine 1a.

In a third step S3 of the method, the respective transmitting antenna(s) and the respective rectenna(s) are directed according to the determined first, second and/or third lines-of-sight A, B, C1, C2, C1', C2'.

For example, in step S3 the at least one transmitting antenna 18 of the central power installation 20, 20' and the at least one rectenna 9a of the idle wind turbine 1a are directed according to the determined first line-of-sight a.

Alternatively or instead, the at least one transmitting antenna 29b of the other wind turbine 1b functioning as power source 43 and the at least one rectenna 9a of the idle wind turbine 1a are directed according to the determined second line-of-sight B.

Alternatively or instead, the at least one transmitting antenna 18 of the central power installation 20, 20' or the at least one transmitting antenna 29b, 29c of the other wind turbine 1b, 1c functioning as power source 43, the at least one rectenna 9b, 9d and the at least one transmitting antenna 29b, 29d of each of the one or more further wind turbines 1b, 1d of the wind farm 19, 19' functioning as relay stations 44, and the at least one rectenna 9a of the idle wind turbine 1a are directed according to the determined multiple third lines-of-sight C1, C2, C1', C2'.

Step S3 is optional. In particular, a wind farm 19, 19' with predetermined fixed directions of the respective rectenna(s) and transmitting antenna(s) may be provided.

In a fourth step S4 of the method, electromagnetic radiation 10 (Fig. 1) is transmitted from the at least one transmitting antenna 18 of the central power installation 20, 20' and/or from the at least one transmitting antenna 29b, 29c of another wind turbine 1b, 1c from the wind farm 19, 19' functioning as power source 43 directly or via one or more further wind turbines 1b, 1d of the wind farm 19, 19' functioning as relay stations 44 to the idle wind turbine 1a.

By determining the power supply scheme for supplying power to an idle wind turbine 1a of the wind farm 19, 19' by power beaming as described above, the electrical power available in the wind farm 19, 19' can be efficiently distributed to idle wind turbines 1a of the wind farm 19, 19'.

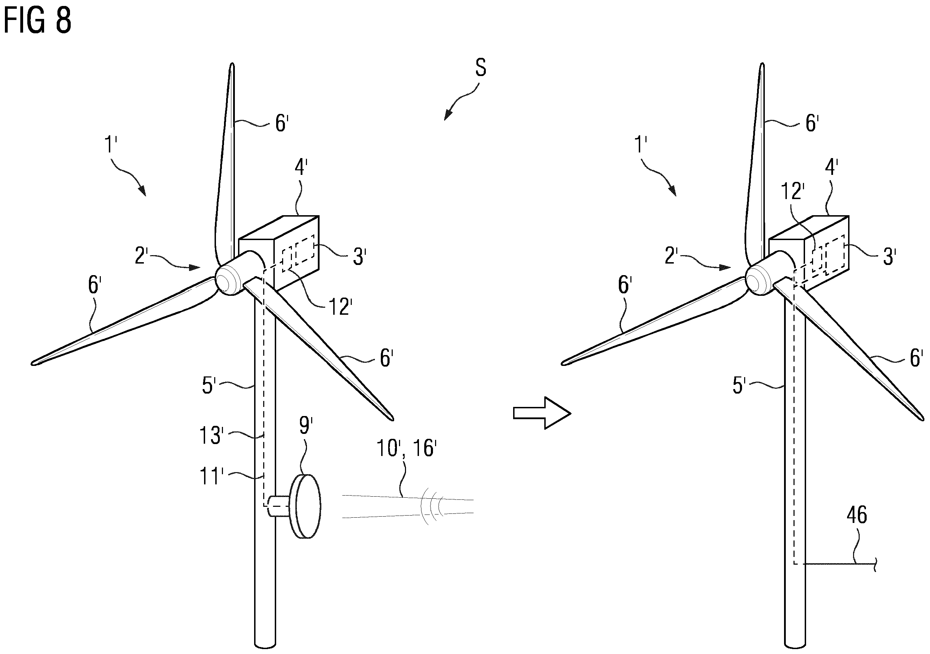

In the following, a method for installing a wind turbine 1' is described with respect to Figs. 7 and 8.

In a first step S1' of the method, a wind turbine 1' is erected at a wind harvesting site S.

In a second step S2' of the method, at least one rectenna 9' for power beaming is arranged at a structure 5' (e.g., a tower 5') of the wind turbine 1'.

In a third step S3' of the method, power 16' is transmitted by power beaming to the wind turbine 1'. In particular, electromagnetic radiation 10' is transmitted from at least one transmitting antenna 18 (Fig. 1) arranged remote from the wind turbine 1' to the at least one rectenna 9' of the wind turbine 1' and converted to direct current 11'.

In a fourth step S4' of the method, the direct current 11' from the rectenna 9' is supplied to one or more electrical devices 12' of the wind turbine 1'. The one or more electrical devices 12' are electrically connected 13' to the at least one rectenna 9'.

Hence, the at least one rectenna 9' for power beaming is used temporarily for supplying the one or more electrical devices 12' of the wind turbine 1' with electrical power during installation of the wind turbine 1'.

In a fifth step S5' of the method, an electrical cable connection 46 from a remote location (e.g., a central onshore or offshore installation of a wind farm 19, 19' and/or a grid) to the wind turbine 1' is provided. The electrical cable connection 46 is configured for transporting electrical energy generated by a generator 3' of the wind turbine 1' to the central installation and/or the grid. In case that the wind turbine 1' is idle, the electrical cable connection 46 can be used for supplying electrical power to the one or more electrical devices 12' of the wind turbine 1'.

In a sixth step S6' of the method, the at least one rectenna 9' is removed from the structure 5' of the wind turbine 1'.

In particular, as soon as the electrical cable connection 46 to the wind turbine 1' is established, the one or more electrical devices 12' of the wind turbine 1' can - if necessary (e.g., when the wind turbine 1' is idle) - be supplied with power by use of the electrical cable connection 46. Then, the temporarily arranged at least one rectenna 9' can be removed again from the structure 5' of the wind turbine 1', as shown on the right side of Fig. 8.

Although the present invention has been described in accordance with preferred embodiments, it is obvious for the person skilled in the art that modifications are possible in all embodiments.

## Claims

1. A wind turbine (1) with a power beaming apparatus (8), wherein
the power beaming apparatus (8) comprises at least one receiving antenna (9) for receiving electromagnetic radiation (10) and converting the received electromagnetic radiation (10) into current (11), and
the wind turbine comprises one or more electrical devices (12) electrically connected with the at least one receiving antenna (9) for supplying the current (11) from the receiving antenna (9) to the one or more electrical devices (12).

2. The wind turbine according to claim 1, comprising a generator (3) for generating electrical power and a hydrogen production apparatus (38) for converting the generated electrical power into hydrogen.

3. The wind turbine according to claim 1 or 2, wherein the one or more electrical devices (12) include one or more electrical loads (15) and/or one or more electrical storage units (26).

4. The wind turbine according to one of claims 1 to 3, wherein the power beaming apparatus (8) comprises one or more actuators (28) for directing the at least one receiving antenna (9) towards a transmitting antenna (18) arranged remote from the wind turbine.

5. The wind turbine according to one of claims 1 to 4, wherein the power beaming apparatus (8) comprises at least one transmitting antenna (29) for transmitting electromagnetic radiation (30) to a receiving antenna (31) arranged remote from the wind turbine.

6. The wind turbine according to claim 5, wherein a rated transmission power of the at least one transmitting antenna (29) is 2 MW or smaller, 1 MW or smaller, 500 kW or smaller, 100 kW or smaller, 50 kW or smaller and/or 10 kW or smaller.

7. The wind turbine according to claim 5, wherein a rated transmission power of the at least one transmitting antenna (29) is 3 MW or larger, 5 MW or larger, 10 MW or larger, 15 MW or larger and/or 20 MW or larger.

8. A central power installation (20) for a wind farm (19), comprising:
a central power source (17) for providing electrical power (21), and
a central power beaming apparatus (22) including at least one transmitting antenna (18) for generating electromagnetic radiation (10) from the provided electrical power (21) and transmitting the electromagnetic radiation (10) to a receiving antenna (9) of a wind turbine (1) of the wind farm (19) .

9. The central power installation according to claim 8, comprising a central control unit (40) configured for determining a power supply scheme for supplying power (16) by power beaming to an idle wind turbine (1a) of the wind farm (19), wherein the power supply scheme includes instructions for transmitting electromagnetic radiation (10) from the at least one transmitting antenna (18) of the central power installation (20) and/or from at least one transmitting antenna (29b) of another wind turbine (1b) of the wind farm (19) functioning as power source (43) directly or via one or more further wind turbines (1d) of the wind farm (19) functioning as relay stations (44) to the idle wind turbine (1a) .

10. The central power installation according to claim 8 or 9, comprising at least one receiving antenna (31) with a reception power of 3 MW or larger, 5 MW or larger, 10 MW or larger, 15 MW or larger and/or 20 MW or larger for receiving power (30) from a power beaming apparatus (8) of a wind turbine (1) of the wind farm (19).

11. A wind farm (19), comprising multiple wind turbines (1) according to one of claims 1 to 7, and/or one or more central power installations (20) according to one of claims 8 to 10.

12. A Method for operating a wind farm (19) comprising multiple wind turbines (1) according to one of claims 1 to 7 and one or more central power installations (20) according to one of claims 8 to 10, the method comprising:
receiving (S1), by a central control unit (40) of the central power installation (20), a data signal (35) indicating that a wind turbine (1a) of the wind farm (19) is idle,
determining (S2), by the central control unit (40), a power supply scheme for supplying power (16) to the idle wind turbine (1a) by power beaming, and
transmitting (S4) electromagnetic radiation (10) from the at least one transmitting antenna (18) of the central power installation (20) and/or from at least one transmitting antenna (29b) of another wind turbine (1b) of the wind farm (19) functioning as power source (43) directly or via one or more further wind turbines (1d) of the wind farm (19) functioning as relay stations (44) to the idle wind turbine (1a) .

13. The method according to claim 12, wherein determining the power supply scheme includes:
determining a first line-of-sight (A) between the at least one transmitting antenna (18) of the central power installation (20) and the at least one receiving antenna (9a) of the idle wind turbine (1a),
determining a second line-of-sight (B) between the at least one transmitting antenna (29b) of the other wind turbine (1b) functioning as power source (43) and the at least one receiving antenna (9a) of the idle wind turbine (1a), and/or
determining one or more third lines-of-sight (C1, C2) between the respective receiving antennas (9a, 9b, 9c, 9d) and transmitting antennas (18, 29a, 29b, 29c, 29d) of each member of a supply chain (45), the members of the supply chain (45) including the central power installation (20) or the other wind turbine (1b) functioning as power source (43), one or more further wind turbines (1d) of the wind farm (19) functioning as relay stations (44), and the idle wind turbine (1a) .

14. The method according to claim 13, comprising:
Directing (S3) the at least one transmitting antenna (18) of the central power installation (20) and the at least one receiving antenna (9a) of the idle wind turbine (1a) according to the determined first line-of-sight (A),
directing (S3) the at least one transmitting antenna (29b) of the other wind turbine (1b) functioning as power source (43) and the at least one receiving antenna (9a) of the idle wind turbine (1a) according to the determined second line-of-sight (B), and/or
directing (S3) the at least one transmitting antenna (18) of the central power installation (20) or the at least one transmitting antenna (29b) of the other wind turbine (1b) functioning as power source (43), the at least one receiving antenna (9d) and the at least one transmitting antenna (29d) of each of the one or more further wind turbines (1d) of the wind farm (19) functioning as relay stations (44), and/or the at least one receiving antenna (9a) of the idle wind turbine (1a) according to the determined multiple third lines-of-sight (C1, C2).

15. A method for installing a wind turbine (1'), comprising
erecting (S1') a wind turbine (1') at a wind harvesting site (S),
arranging (S2') at least one receiving antenna (9') for power beaming at a structure (5') of the wind turbine (1'),
transmitting (S3') power (16') by power beaming to the wind turbine (1'), wherein electromagnetic radiation (10') is transmitted from at least one transmitting antenna (18) arranged remote from the wind turbine (1') to at least one receiving antenna (9') of the wind turbine (1') and converted to current (11'),
supplying (S4') the current (11') from the receiving antenna (9') to one or more electrical devices (12') of the wind turbine (1'),
providing (S5') an electrical cable connection (46) from a remote location to the wind turbine (1'), and
removing (S6') the at least one receiving antenna (9') from the structure (5') of the wind turbine (1').
